# EUROPEAN PATENT SPECIFICATION

(11) **EP 1 930 454 B1**
(45) Date of publication and mention of the grant of the patent: **25.03.2009**
(21) Application number: 07075310.8
(22) Date of filing: 25.04.2007
(51) Int. Cl.: C22C 16/00, G21C 3/07, C22F 1/18

(54) **Zirconium alloy composition having excellent corrosion resistance for nuclear applications and method of preparing the same**
Zirkoniumlegierungszusammensetzung mit ausgezeichneter Korrosionsbeständigkeit für nukleare Anwendungen und Verfahren zu ihrer Herstellung
Composition d'alliage en zirconium comportant une excellente résistance à la corrosion pour des applications nucléaires et son procédé de préparation

(30) Priority: 05.12.2006 KR 20060122414
(43) Date of publication of application: 11.06.2008
(73) Proprietor: Korea Atomic Energy Research Institute, Daejeon 305-353 (KR); Korea Hydro & Nuclear Power Co., Ltd., Seoul 135-791 (KR)
(72) Inventor: Jeong, Yong Hwan, Yuseong-gu Daejeon (KR); Choi, Byoung Kwon, Seo-gu Daejeon 302-762 (KR); Baek, Jong Hyuk, Seo-gu Daejeon 302-120 (KR); Lee, Myung Ho, Yuseong-gu Daejeon (KR); Park, Sang Yoon, Yuseong-gu Daejeon 305-330 (KR); Park, Jeong Yong, Yuseong-gu Daejeon (KR); Kim, Jun Hwan, Yuseong-gu Daejeon (KR); Kim, Hyun Gil, Yuseong-gu Daejeon (KR)
(74) Representative: Kortekaas, Marcel C.J.A.

(56) References cited:
- EP-A- 1 688 508
- EP-A1- 1 225 243
- WO-A-01/24193
- US-B2- 6 902 634

## Description

### Field of the Invention

The present invention relates to a zirconium alloy composition having excellent corrosion resistance for nuclear applications and to a method of preparing the same.

### Description of the Related Art

During the last several decades, zirconium alloys, which have a small neutron absorption cross section and excellent corrosion resistance and mechanical properties, have been widely used as materials for nuclear fuel cladding tubes, nuclear fuel assembly support grids, and structural components in pressurized water reactors (PWRs) and boiling water reactors (BWRs). Among zirconium alloys developed to date, particularly useful are Zircaloy-2 (1.20-1.70 wt% of tin, 0.07~0.20 wt% of iron, 0.05~1.15 wt% of chromium, 0.03~0.08 wt% of nickel, 900~1500 ppm of oxygen, and the balance being zirconium) and Zircaloy-4 (1.20~1.70 wt% of tin, 0.18~0.24 wt% of iron, 0.07~1.13 wt% of chromium, 900~1500 ppm of oxygen, less than 0.007 wt% of nickel, and the balance of zirconium), comprising tin (Sn), iron (Fe), chromium (Cr) and nickel (Ni).

However, in recent years, as part of the economic improvement of nuclear reactors, in order to decrease nuclear fuel cycle costs, high burn-up operation due to an extended refueling cycle has been adopted. Accordingly, as the refueling cycle is extended, the duration of reaction of the nuclear fuel with high-temperature and high-pressure water and steam is increased. Thus, in the case where conventional Zircaloy-2 or Zircaloy-4 is used as material for nuclear fuel cladding tubes, problems in which the nuclear fuel is severely corroded are on the rise.

Hence, there is an urgent need for the development of high burn-up nuclear fuel cladding material having superior corrosion resistance with respect to high-temperature and high-pressure water and steam. A lot of research is being directed toward the development of zirconium alloys having improved corrosion resistance. As such, since the corrosion resistance of the zirconium alloy is greatly affected by the types and amounts of elements to be added, the working conditions, and heat treatment conditions, establishing optimal conditions is the most important factor for the induction of excellent corrosion resistance.

When briefly investigating patents concerning cladding tubes of high burn-up and extended cycle nuclear fuel, registered after the middle of the 1980s, the addition of niobium (Nb) and the decrease in the amount of tin (Sn) are characteristic, compared to the Zircaloy-based alloys. That is, the zirconium alloy for high burn-up and extended cycle nuclear fuel essentially contains niobium, and the optimal preparation process thereof is provided to exhibit excellent performance. Further, for high creep resistance, zirconium alloys, in which a small amount of sulfur (S) is added, are registered, and high corrosion resistance accompanies the control of amounts of alloying elements.

US Patent No. 4,649,023 discloses a zirconium alloy, comprising 0.5~2.0 wt% of niobium, 0.9~1.5 wt% of tin, 0.09~0.11 wt% of one element selected from the group consisting of iron, chromium, molybdenum, vanadium, copper, nickel, and tungsten, and 0.1~0.16 wt% of oxygen, with the balance being zirconium, and also a process of preparing the alloy, in which the size of the precipitate in a matrix is limited to 80 nm or less.

US Patent No. 5,112,573, which specifies the alloy composition disclosed in US Patent No. 4,649,023, discloses a process of preparing a zirconium alloy, comprising 0.5~2.0 wt% of niobium, 0.7~1.5 wt% of tin, 0.07~0.14 wt% of iron, 0.03~0.14 wt% of nickel or chromium, and 0.022 wt% or less of carbon, with the balance being zirconium.

US Patent Nos. 5,125,985 and 5,266,131 disclose a process of preparing a zirconium alloy having the same composition as that disclosed in US Patent No. 5,112,573, in which a β-quenching process is introduced at a late stage during cold-rolling of the above alloy, in order to increase creep resistance and corrosion resistance.

US Patent No. 5,648,995 discloses a method of preparing a zirconium alloy comprising 0.8~1.3 wt% of niobium, 0.005~0.025 wt% of iron, 0.16 wt% or less of oxygen, 0.02 wt% or less of carbon, and 0.012 wt% or less of silicon, with the balance being zirconium, in which the amount of iron is controlled to be very low so as to increase creep resistance.

US Patent No. 5,832,050 discloses a method of adding 8~100 ppm of sulfur to eight various zirconium alloys, including a zirconium alloy composed of 0.7~1.3 wt% of niobium, 0.09~0.16 wt% of oxygen and the balance of zirconium, in order to increase creep resistance, and a process of preparing these alloys.

US Patent No. 6,544,361 discloses a zirconium alloy comprising 0.8~1.3 wt% of niobium, 0.05~0.2 wt% of oxygen, 300 ppm or less of tin, 0.25 wt% or less of iron + chromium + vanadium, and 5~35 ppm of sulfur, and a process of preparing material for a thin strap having excellent resistance to creep, corrosion, and hydrogen absorption.

US Patent No. 5,940,464 discloses an alloy composition, comprising 0.8~1.8 wt% of niobium, 0.2~0.6 wt% of tin, 0.02~0.4 wt% of iron, 30~180 ppm of carbon, 10~120 ppm of silicon, and 600~1800 ppm of oxygen, with the balance being zirconium, and a preparation process thereof, in order to increase corrosion resistance and creep resistance.

US Patent Nos. 6,261,516, 6,514,360 and 6,902,634 disclose various zirconium alloy compositions, including a zirconium alloy composed of 1.1~1.7 wt% of niobium, 600~1600 ppm of oxygen and 80~120 ppm of silicon, and a preparation process thereof. As such, the preparation of the zirconium alloy, having excellent corrosion resistance, requires that heat treatment temperature and time, the precipitate size, and the concentration of niobium oversaturated in a matrix be controlled.

In US Patent No. 4,938,920, the amount of tin is decreased to 0-0.8 wt%, and 0-0.3 wt% of vanadium, 0-1.0 wt% of niobium, and 1000~1600 ppm of oxygen are added to develop an alloy having higher corrosion resistance than that of conventional Zircaloy-4. In this case, the amounts of iron and chromium are set in the range of 0.2~0.8 wt% and 0~0.4 wt%, respectively, and the sum of iron, chromium and vanadium is limited to 0.25~1.0 wt%.

US Patent No. 5,254,308 discloses a zirconium alloy containing niobium and iron, which function to prevent the deterioration of the mechanical properties of the alloy, attributable to a decrease in the amount of tin, to improve the corrosion resistance of the alloy. This alloy is composed of 0.45~0.75 wt% of tin, 0.4~0.53 wt% of iron, 0.2~0.3 wt% of chromium, 0.3~0.5 wt% of niobium, 0.012~0.3 wt% of nickel, 50~200 ppm of silicon, and 1000~2000 ppm of oxygen. The ratio of iron to chromium, which may affect the corrosion properties, is fixed at 1.5, and the amount of niobium is determined depending on the hydrogen absorption. Furthermore, the amounts of nickel, silicon, carbon and dissolved oxygen are finely controlled, resulting in excellent corrosion resistance and strength.

US Patent No. 5,334,345 discloses an alloy composition, comprising 1.0~2.0 wt% of tin, 0.07~0.7 wt% of iron, 0.05~0.15 wt% of chromium, 0.16~0.4 wt% of nickel, 0.015~0.3 wt% of niobium, 20~500 ppm of silicon and 900~1600 ppm of oxygen, in order to increase corrosion resistance and hydrogen absorption.

US Patent No. 5,366,690 discloses an alloy composition, in which the amounts of tin, nitrogen, and niobium are mainly controlled, and which comprises 0-1.5 wt% of tin, 0-0.24 wt% of iron, 0-0.15 wt% of chromium, 0~2300 ppm of nitrogen, 0~100 ppm of silicon, 0~1600 ppm of oxygen, and 0-0.5 wt% of niobium.

US Patent No. 5,211,774 discloses a zirconium alloy composition in order to increase the mechanical properties and corrosion properties in a neutron irradiation environment. The alloy is composed of 0.8~1.2 wt% of tin, 0.2~0.5 wt% of iron, 0.1~0.4 wt% of chromium, 0-0.6 wt% of niobium, 50~200 ppm of silicon, and 900~1800 ppm of oxygen, in which the amount of silicon is varied in order to decrease changes in hydrogen absorption and corrosion resistance.

In the conventional techniques related to the zirconium alloys mentioned above, Zircaloy-4 and various zirconium alloys have been mainly developed, and furthermore, the zirconium alloys containing niobium, iron, and chromium have also been developed in order to increase corrosion resistance. However, compared to such zirconium alloys, the development of zirconium alloys, having superior corrosion resistance suitable for high burn-up and extended fuel cycle operating conditions in nuclear power plants, is still required.

### SUMMARY OF THE INVENTION

Leading to the present invention, thorough research into zirconium alloys having high corrosion resistance, carried out by the present inventors aiming to solve the problems encountered in the prior art, resulted in the development of a zirconium alloy composition having excellent corrosion resistance by controlling the amounts of alloying elements, including niobium, at least one of iron and copper, silicon, carbon, and oxygen.

An object of the present invention is to provide a zirconium alloy composition having excellent corrosion resistance, which can be used as material for nuclear fuel cladding tubes and core components under high temperature/high pressure conditions of light water reactors and heavy water reactors.

In order to accomplish the above object, the present invention provides a zirconium alloy composition having excellent corrosion resistance, comprising 1.3~2.0 wt% of niobium, 0.05~0.18 wt% of iron, 0.008~0.012 wt% of silicon, and 0.1~0.16 wt% of oxygen, with the balance being zirconium.

In addition, the present invention provides a zirconium alloy composition having excellent corrosion resistance, comprising 2.8~3.5 wt% of niobium, 0.2~0.7 wt% of at least one of iron and copper, 0.008~0.012 wt% of silicon, 0.008~0.012 wt% of carbon, and 0.1~0.16 wt% of oxygen, with the balance being zirconium.

### BRIEF DESCRIPTION OF THE DRAWINGS

FIG. 1 is a graph showing the corrosion properties of the zirconium alloy with respect to water (O) and steam (□) depending on the amount of iron in the Zr-1.5Nb-xFe-0.01Si-0.01C-0.130 alloy; and
FIG. 2 is a graph showing the corrosion properties of the zirconium alloy with respect to water (O) and steam (□) depending on the total amount of iron and copper in the Zr-3.0Nb-x(Fe+Cu)-0.01Si-0.01C-0.130 alloy.

### DETAILED DESCRIPTION OF THE INVENTION

Hereinafter, a detailed description will be given of the present invention.

According to the present invention, the zirconium alloy composition comprises 1.3~2.0 wt% of niobium, 0.05~0.18 wt% of iron, 0.008~0.012 wt% of silicon, and 0.1~0.16 wt% of oxygen, with the balance being zirconium, and preferably comprises 1.4~1.6 wt% of niobium, 0.08~0.12 wt% of iron, 0.009~0.011 wt% of silicon, 0.009~0.011 wt% of carbon, and 0.12~0.14 wt% of oxygen, with the balance being zirconium.

In addition, the zirconium alloy composition according to the present invention comprises 2.8~3.5 wt% of niobium, 0.2~0.7 wt% of at least one of iron and copper, 0.008~0.012 wt% of silicon, 0.008~0.012 wt% of carbon, and 0.1~0.16 wt% of oxygen, with the balance being zirconium, and preferably comprises 2.8~3.2 wt% of niobium, 0.4~0.6 wt% of at least one of iron and copper, 0.009~0.011 wt% of silicon, 0.009~0.011 wt% of carbon, and 0.12~0.14 wt% of oxygen, with the balance being zirconium.

The most important problem to be solved for nuclear fuel used in high burn-up and extended cycle conditions is the drastic increase in surface corrosion due to high heat flux and long exposure time under reactor conditions. When the corrosion is increased, an oxide film, which is highly brittle, is increasingly formed, and furthermore, hydrogen is introduced in a large amount into a matrix, undesirably deteriorating the structural soundness of nuclear fuel rods. Thus, the development of material for cladding tubes having excellent corrosion resistance can directly contribute to the increase in economic efficiency of light water reactors and heavy water reactors and the improvement of safety thereof. In the present invention, with the goal of inhibiting the corrosion under reactor conditions, niobium, which is known to greatly contribute to an increase in corrosion resistance in a neutron irradiation environment, is added in as large an amount as possible. Further, iron and copper are added in appropriate amounts, thus increasing corrosion resistance.

Below, individual elements of the zirconium alloy composition of the present invention are specifically described.

### (1) Niobium (1^{st} Alloying Element)

Niobium is known as a β-phase stabilizer element of zirconium. The influence of niobium on corrosion resistance is variable. Typically, when niobium is added in an amount of 0.5 wt% or less (low niobium content) or 1.0 wt% or more (high niobium content), corrosion resistance is known to be improved. When niobium is added to a zirconium matrix in an amount not less than a solid solubility thereof, the zirconium matrix is hardened due to the solid solution of niobium and precipitation of niobium, thus improving the mechanical properties of zirconium.

The niobium, which is added to the zirconium alloy, essentially functions to increase corrosion resistance and also affects an increase of tensile and creep performance. The amount of niobium used in the present invention may be adjusted depending on the amount of at least one of iron and copper. In the case where iron, acting as a second alloying element, is used in an amount less than 0.2 wt%, niobium is preferably added in an amount of 1.3~2.0 wt%. On the other hand, in the case where at least one of iron and copper is added in an amount not less than 0.2 wt%, niobium is preferably added in an amount of 2.8~3.5 wt%. If the amount thereof falls outside of the above range, the corrosion resistance of the zirconium alloy is decreased.

### (2) Iron and Copper (2^{nd} Alloying Elements)

Iron and copper, which are added as second alloying elements, are known to increase the corrosion resistance of the zirconium alloy. Even when they are added in very small amounts, corrosion resistance is increased. In the zirconium alloy composition according to the present invention, when iron is added in an amount less than 0.2 wt%, the amount thereof is preferably controlled in the range of 0.05~0.18 wt%. On the other hand, in the case where iron and copper is added in an amount not less than 0.2 wt%, the amount thereof is preferably adjusted in the range of 0.2~0.7 wt%. If the amount thereof falls outside of the above range, the corrosion resistance of the zirconium alloy is decreased.

In the zirconium alloy composition of the present invention, the amount of niobium is increased in proportion to an increase in amount of at least one of iron and copper. However, when the total amount of iron and copper added exceeds 0.7 wt%, defects in the working zone may occur. Consequently, it is preferred that the total amount of iron and copper be not more than 0.7 wt%.

### (3) Silicon, Carbon, and Oxygen

Silicon and carbon function to decrease hydrogen absorption in the zirconium matrix and to retard a transition phenomenon, causing a drastic increase in corrosion over time, and oxygen is dissolved in the zirconium matrix to generate a solid solution so as to increase the mechanical strength of the zirconium alloy.

In the zirconium alloy composition of the present invention, silicon and carbon, which are used in a very small amount, are preferably added in an amount of 0.008~0.012 wt%, and oxygen is preferably added in an amount of 0.1~0.16 wt%. If the amount of silicon and carbon falls outside of the above range, corrosion resistance is decreased, and furthermore, if the amount of oxygen falls outside of the above range, low corrosion resistance and poor workability may result.

The zirconium alloy composition of the present invention may be prepared using a typical process known in the art, and the preparation method thereof preferably comprises a first step of mixing and melting alloying elements to thus prepare an ingot, a second step of heat treating the ingot prepared in the first step in a β-region and cooling it, a third step of subjecting the ingot heat treated and cooled in the second step to hot rolling, and a fourth step of subjecting the ingot treated in the third step to cold rolling and heat treating, thus preparing a zirconium alloy. After the cold rolling of the fourth step, final heat treatment may be further included.

Below, the preparation method of the present invention is stepwisely described in detail.

The first step is a process of mixing the alloying elements at a predetermined ratio and melting them, thus preparing the ingot.

The ingot is preferably prepared using a vacuum arc remelting (VAR) process. Specifically, the vacuum state in a chamber is maintained at 1.33 mPa, after which argon (Ar) gas is injected thereto at 1.33×104 ~ 3.99×10⁴ mPa and 500~1000 A of current is applied, to thus perform the melting process, and then a cooling process is conducted, thereby preparing the ingot in the shape of a button.

As such, in order to prevent the segregation of impurities or the non-uniform distribution of the alloy composition in the button, it is preferred that the melting process be repeated three to six times. In the cooling process, in order to prevent the surface of the test piece from being oxidized, inert gas, such as argon, is preferably injected.

Subsequently, the second step is a process of heat treating the ingot, prepared in the first step, in a β-region and then cooling it.

To homogenize the alloy composition in the ingot and obtain fine precipitates, the ingot is heat treated in a β-region and then cooled. As such, with the goal of preventing the test piece from being oxidized, the test piece is clad with stainless steel, and heated treated at 1000~1200°C, and preferably at 1020~1070°C, for 5~30 min, and preferably for 10~20 min. After the heat treatment, a quenching process using water at room temperature is preferably performed.

Subsequently, the third step is a process of hot rolling the test piece treated in the second step. Specifically, the hot rolling process is performed in a manner such that the test piece is preheated to 55~750°C, and preferably to 580~610°C, for 2~50 min, and preferably for 5~40 min, and is rolled at a reduction ratio of 40~80%, and preferably 50~70%.

After the hot rolling process is performed, the cladding is removed, and then an oxide film which is generated upon β-heat treatment or hot rolling, is removed using an acid solution. Furthermore, portions of the oxide film, remaining after the acid cleaning process, may be completely removed through a mechanical process using an electromotive wire brush.

Subsequently, the fourth step is a process of cold rolling and heat treating the test piece which was hot rolled in the third step, thus preparing the zirconium alloy.

The hot rolled test piece is subjected to annealing at 550~610°C, and preferably at 560~600°C, for a time period from 20 min to 3 hours, and then to cold rolling at a reduction ratio of 40~60%, after which heat treatment at 560~600°C for 1~3 hours and cold rolling are repeated. In this case, the heat treatment and cold rolling are repeated several times, and preferably, three to five times.

After the final cold rolling process is performed, final heat treatment for recrystallization or relieving residual stress may be further included. This final heat treatment is preferably performed at 500~600°C for 1~3 hours. According to this method, the zirconium alloy composition according to the present invention can be prepared.

As the results of a corrosion test, the zirconium alloy composition of the present invention, comprising the above elements and amounts, can be seen to exhibit excellent corrosion resistance (Table 2), and therefore can be usefully used in high burn-up nuclear fuel cladding tubes, support grids, and structural components of nuclear power plants.

A better understanding of the present invention may be obtained through the following examples, which are set forth to illustrate, but are not to be construed as the limit of the present invention.

### <Example 1> Preparation of Zirconium Alloy

### (1) Preparation of Ingot

A zirconium alloy composition, comprising 1.58 wt% of niobium, 0.05 wt% of iron, 0.01 wt% of silicon, 0.01 wt% of carbon, and 0.13 wt% of oxygen, with the balance being zirconium, was subjected to VAR to thus prepare an ingot having a weight of 200 g in a button shape. As such, as zirconium, reactor grade sponge zirconium, described in ASTM B349, was used, and the alloying elements had high purity of 99.99% or more. In addition, silicon, carbon, and oxygen were subjected along with sponge zirconium to first melting to thus prepare a mother alloy, which was then added in a desired amount upon ingot melting. In order to prevent the segregation of impurities or the non-uniform distribution of the alloy composition, the melting process was repeated four times. Further, in order to prevent the oxidation upon the melting process, the vacuum state in a chamber was maintained at 1.33 mPa (1 x 10⁻⁵ torr), argon gas having high purity of 99.99% was injected, and 500 A of current was applied, and thus an ingot was prepared in a water-cooled copper crucible having a diameter of 60 mm at a water pressure of 98 kPa (1 kgf/cm²).

### (2) β-Heat Treatment

To uniformly distribute the alloy composition in the ingot, the prepared ingot was subjected to solution heat treatment at 1050°C, which was a β-phase temperature, for 15 min. To prevent the test piece from being oxidized, the test piece was clad with a stainless steel plate 1 mm thick. After the completion of the heat treatment, the ingot was dropped into a water bath filled with water at room temperature to thus be quenched, resulting in a martensite structure. Thereafter, the ingot was dried at 150°C for 24 hours to remove water from the cladding thereof.

### (3) Hot Rolling

A hot rolling process was performed using a rolling mill having a capacity of 100 tons. The test piece was preheated to 590°C for 30 min and then rolled at a reduction ratio of about 70% per pass. After the hot rolling process, the cladding was removed, and an oxide film, resulting from β-heat treatment or hot rolling, was removed using an acid solution comprising hydrofluoric acid:nitric acid:water=5%:45%:50% at a volume ratio. Subsequently, portions of the oxide film remaining after the acid cleaning were completely removed using an electromotive wire brush.

### (4) Cold Rolling and Heat Treatment

In order to remove residual stress after the hot rolling process and to prevent the test piece from breaking down when first cold rolled, the test piece was annealed at 590°C for 30 min, and was then subjected to first cold rolling at a reduction ratio of 50% according to a decrease in thickness of about 0.5 mm per pass using a rolling mill having a capacity of 70 tons. Thereafter, the first cold rolled test piece was subjected to intermediate recrystallization heat treatment at 570°C for 2.5 hours, and then to second cold rolling at a reduction ratio of 50%. Thereafter, the second cold rolled test piece was subjected to intermediate recrystallization heat treatment at 570°C for 2.5 hours and then to third cold rolling at a reduction ratio of 50%.

### (5) Final Heat Treatment

The test piece was subjected to final heat treatment at 510°C for 2.5 hours to relieve the stress generated after the cold rolling process. The test piece, which was subjected to final heat treatment, was about 0.7 mm thick.

### <Example 2>

The present example was performed in the same manner as in Example 1, with the exception that a zirconium alloy composition, comprising 1.51 wt% of niobium, 0.09 wt% of iron, 0.01 wt% of silicon, 0.01 wt% of carbon, and 0.13 wt% of oxygen, with the balance being zirconium, was used.

### <Example 3>

The present example was performed in the same manner as in Example 1, with the exception that a zirconium alloy composition, comprising 1.72 wt% of niobium, 0.14 wt% of iron, 0.01 wt% of silicon, 0.01 wt% of carbon, and 0.13 wt% of oxygen, with the balance being zirconium, was used.

### <Example 4>

The present example was performed in the same manner as in Example 1, with the exception that a zirconium alloy composition, comprising 1.38 wt% of niobium, 0.18 wt% of iron, 0.01 wt% of silicon, 0.01 wt% of carbon, and 0.13 wt% of oxygen, with the balance being zirconium, was used.

### <Example 5>

The present example was performed in the same manner as in Example 1, with the exception that a zirconium alloy composition, comprising 3.01 wt% of niobium, 0.21 wt% of iron, 0.01 wt% of silicon, 0.01 wt% of carbon, and 0.13 wt% of oxygen, with the balance being zirconium, was used, and final heat treatment was conducted at 570°C.

### <Example 6>

The present example was performed in the same manner as in Example 5, with the exception that a zirconium alloy composition, comprising 3.12 wt% of niobium, 0.48 wt% of iron, 0.01 wt% of silicon, 0.01 wt% of carbon, and 0.13 wt% of oxygen, with the balance being zirconium, was used.

### <Example 7>

The present example was performed in the same manner as in Example 5, with the exception that a zirconium alloy composition, comprising 3.05 wt% of niobium, 0.24 wt% of copper, 0.01 wt% of silicon, 0.01 wt% of carbon, and 0.13 wt% of oxygen, with the balance being zirconium, was used.

### <Example 8>

The present example was performed in the same manner as in Example 5, with the exception that a zirconium alloy composition, comprising 2.95 wt% of niobium, 0.51 wt% of copper, 0.01 wt% of silicon, 0.01 wt% of carbon, and 0.13 wt% of oxygen, with the balance being zirconium, was used.

### <Example 9>

The present example was performed in the same manner as in Example 5, with the exception that a zirconium alloy composition, comprising 3.09 wt% of niobium, 0.05 wt% of iron, 0.25 wt% of copper, 0.01 wt% of silicon, 0.01 wt% of carbon, and 0.13 wt% of oxygen, with the balance being zirconium, was used.

### <Example 10>

The present example was performed in the same manner as in Example 5, with the exception that a zirconium alloy composition, comprising 3.11 wt% of niobium, 0.27 wt% of iron, 0.28 wt% of copper, 0.01 wt% of silicon, 0.01 wt% of carbon, and 0.13 wt% of oxygen, with the balance being zirconium, was used.

### <Example 11>

The present example was performed in the same manner as in Example 5, with the exception that a zirconium alloy composition, comprising 2.98 wt% of niobium, 0.32 wt% of iron, 0.35 wt% of copper, 0.01 wt% of silicon, 0.01 wt% of carbon, and 0.13 wt% of oxygen, with the balance being zirconium, was used.

### <Comparative Example 1>

The present example was performed in the same manner as in Example 1, with the exception that a zirconium alloy composition, comprising 1.55 wt% of niobium, 0.01 wt% of silicon, 0.01 wt% of carbon, and 0.13 wt% of oxygen, with the balance being zirconium, was used without the addition of copper or iron.

### <Comparative Example 2>

The present example was performed in the same manner as in Example 1, with the exception that a zirconium alloy composition, comprising 3.1 wt% of niobium, 0.01 wt% of silicon, 0.01 wt% of carbon, and 0.13 wt% of oxygen, with the balance being zirconium, was used without the addition of copper or iron.

### <Comparative Example 3>

A reactor grade Zircaloy-4, which was commercially available as material for nuclear fuel cladding tubes of nuclear power plants, was used.

The zirconium alloy compositions are shown in Table 1 below.

**TABLE 1**

| Ratio of Zirconium Alloy Composition | | | | | | | |
|---|---|---|---|---|---|---|---|
| No. | Nb(wt%) | Fe(wt%) | Cu(wt%) | C(wt%) | O(wt%) | Si(wt%) | Zr |
| Ex.1 | 1.58 | 0.05 | | 0.01 | 0.13 | 0.01 | Balance |
| Ex.2 | 1.51 | 0.09 | | 0.01 | 0.13 | 0.01 | Balance |
| Ex.3 | 1.72 | 0.14 | | 0.01 | 0.13 | 0.01 | Balance |
| Ex.4 | 1.38 | 0.18 | | 0.01 | 0.13 | 0.01 | Balance |
| Ex.5 | 3.01 | 0.21 | | 0.01 | 0.13 | 0.01 | Balance |
| Ex.6 | 3.12 | 0.48 | | 0.01 | 0.13 | 0.01 | Balance |
| Ex.7 | 3.05 | | 0.24 | 0.01 | 0.13 | 0.01 | Balance |
| Ex.8 | 2.95 | | 0.51 | 0.01 | 0.13 | 0.01 | Balance |
| Ex.9 | 3.09 | 0.05 | 0.25 | 0.01 | 0.13 | 0.01 | Balance |
| Ex.10 | 3.11 | 0.27 | 0.28 | 0.01 | 0.13 | 0.01 | Balance |
| Ex.11 | 2.98 | 0.32 | 0.35 | 0.01 | 0.13 | 0.01 | Balance |
| C.Ex.1 | 1.55 | | | 0.01 | 0.13 | 0.01 | Balance |
| C.Ex.2 | 3.10 | | | 0.01 | 0.13 | 0.01 | Balance |
| C.Ex.3 (Zircaloy-4) | Sn:1.35 wt%, Fe:0.2 wt%, Cr:0.1 wt%, O:0.12 wt%, Zr:balance | | | | | | |

### <Experimental Example 1> Corrosion test

In order to evaluate the corrosion resistance of the zirconium alloy composition according to the present invention, the following corrosion test was conducted.

Each of the zirconium alloys of Examples 1~11 and Comparative Examples 1~3 was formed into a corrosion test piece in the shape of a coupon having a size of 15 mm × 25 mm × 0.7 mm, after which the surface thereof was polished using SiC polishing paper of 800 grit. Thereafter, the test piece was dipped into a solution of water:nitric acid:hydrofluoric acid at a volume ratio of 50:45:5, to thus remove impurities and fine defects from the surface thereof. The alloy test piece thus surface treated was measured for surface area and initial weight immediately before it was loaded into an autoclave. Thereafter, the test piece was loaded into the autoclave, having water at 360°C (18.5 MPa) and a steam atmosphere at 400°C (10.3 MPa) to thus undergo corrosion for 546 days, after which the weight of the test piece was measured. The extent of corrosion was calculated using the weight increase per surface area, and thus qualitatively evaluated. The results of the corrosion test are shown in Table 2 below.

**TABLE 2**

| No. | Weight Increase (mg/dm²) | |
|---|---|---|
| | Water at 360°C | Steam at 400°C |
| Ex.1 | 64 | 198 |
| Ex.2 | 56 | 187 |
| Ex.3 | 52 | 165 |
| Ex.4 | 51 | 159 |
| Ex.5 | 68 | 209 |
| Ex.6 | 61 | 192 |
| Ex.7 | 67 | 193 |
| Ex.8 | 65 | 178 |
| Ex.9 | 63 | 196 |
| Ex.10 | 61 | 198 |
| Ex.11 | 58 | 202 |
| C.Ex.1 | 73 | 223 |
| C.Ex.2 | 77 | 251 |
| C.Ex.3 | 172 | 252 |

As is apparent from Table 2, in the zirconium alloys of Examples 1~11 comprising the zirconium alloy composition of the present invention, the weight increases attributable to corrosion by water were determined to be 51~65 mg/dm², which were lower than those of the comparative examples (73, 77 or 172 mg/dm²), resulting in superior corrosion resistance. Furthermore, even in the case of corrosion by steam, the weight increases were determined to be 159~209 mg/dm², which were lower than those of the comparative examples (223, 251 or 252 mg/dm²), leading to excellent corrosion resistance. Accordingly, the zirconium alloy composition of the invention has excellent corrosion resistance with respect to water and steam, and therefore can be usefully used in high burn-up nuclear fuel cladding tubes, support grids, and reactor structural components of nuclear power plants.

### <Experimental Example 2> Corrosion test depending on amount of Iron or Copper

The zirconium alloy of the invention was subjected to the following test to evaluate the corrosion resistance thereof depending on the amount of iron or copper.

### (1) Corrosion Resistance depending on Amount of Iron

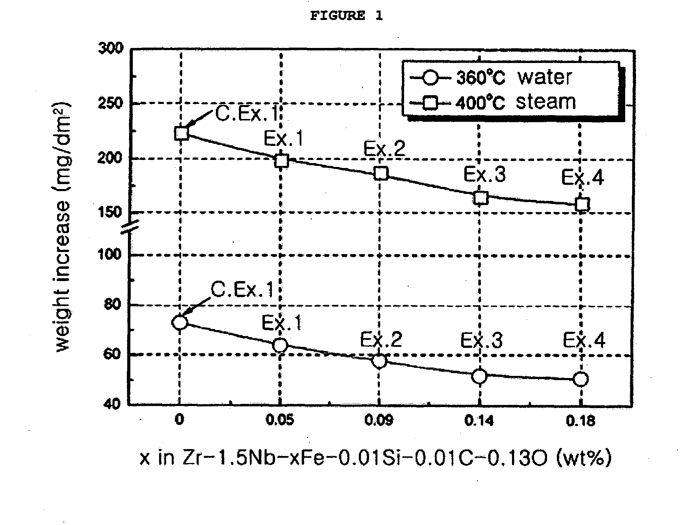

While the amount of iron was increased in the alloy compositions of Examples 1~4 and Comparative Example 1 (Zr-1.5Nb-xFe-0.01Si-0.01C-0.130 alloy), corrosion resistance was qualitatively evaluated in the same manner as in Test Example 1. The results are shown in FIG. 1.

As illustrated in FIG. 1, as the amount of iron was increased in the zirconium alloy, the weight increase of the test piece was seen to be decreased. That the weight increase was decreased indicated less adsorption of impurities, thus resulting in low corrosion. Therefore, when the amount of iron was increased in the zirconium alloy, corrosion resistance was observed to increase.

### (2) Corrosion Resistance depending on total amounts of Iron and Copper

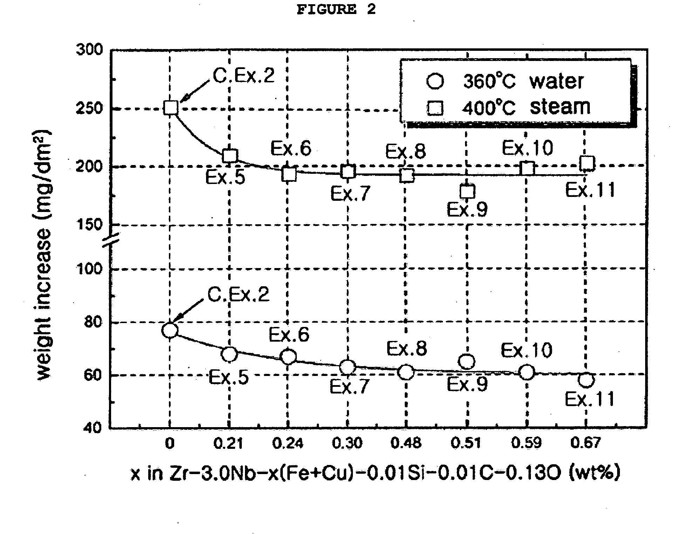

While the total amounts of iron and copper (Fe+Cu) was increased in the alloy compositions of Examples 5~11 and Comparative Example 2 (Zr-3.0Nb-x(Fe+Cu)-0.01Si-0.01C-0.130 alloy), corrosion resistance was qualitatively evaluated using the same manner as in Test Example 1. The results are shown in FIG. 2.

As illustrated in FIG. 2, as the total amounts of iron and copper were increased in the zirconium alloy, the weight increase of the test piece was decreased, leading to high corrosion resistance.

As described hereinbefore, the present invention provides a zirconium alloy composition having excellent corrosion resistance for nuclear applications and a method of preparing the same. In the zirconium alloy composition according to the invention, the amount of niobium, acting as a first alloying element, and the amount of at least one of iron and copper, acting as a second alloying element, are appropriately controlled, and silicon, carbon and oxygen are added in appropriate amounts, therefore realizing excellent corrosion resistance. Thus, the zirconium alloy composition of the invention can be usefully used as materials for nuclear fuel cladding tubes, support grids, and core components of light water reactors and heavy water reactors.

Although the preferred embodiments of the present invention have been disclosed for illustrative purposes, those skilled in the art will appreciate that various modifications, additions and substitutions are possible, without departing from the scope of the invention as disclosed in the accompanying claims.

### Prior Art

1) US 4,649,023
2) US 5,112,573
3) US 5,125,985
4) US 5,266,131
5) US 5,648,995
6) US 5,832,050
7) US 6,544,361
8) US 5,940,464
9) US 6,261,516
10) US 6,514,360
11) US 6,902,634
12) US 4,938,920
13) US 5,254,308
14) US 5,334,345
15) US 5,366,690
16) US 5,211,774

## Claims

1. A zirconium alloy composition having excellent corrosion resistance for nuclear applications, comprising 1.3~2.0 wt% of niobium, 0.05~0.18 wt% of iron, 0.008~0.012 wt% of silicon, 0.008~0.012 wt% of carbon, and 0.1~0.16 wt% of oxygen, with a balance being zirconium.

2. The zirconium alloy composition according to claim 1, wherein said composition comprises 1.4~1.6 wt% of niobium, 0.08~0.12 wt% of iron, 0.009~0.011 wt% of silicon, 0.009~0.011 wt% of carbon, and 0.12~0.14 wt% of oxygen, with the balance being zirconium.

3. A zirconium alloy composition having excellent corrosion resistance for nuclear applications, comprising 2.8~3.5 wt% of niobium, 0.2~0.7 wt% of at least one of iron and copper, 0.008~0.012 wt% of silicon, 0.008~0.012 wt% of carbon, and 0.1~0.16 wt% of oxygen, with a balance being zirconium.

4. The zirconium alloy composition according to claim 3, wherein said composition comprises 2.8~3.2 wt% of niobium, 0.4~0.6 wt% of at least one of iron and copper, 0.009~0.011 wt% of silicon, 0.009~0.011 wt% of carbon, and 0.12~0.14 wt% of oxygen, with the balance being zirconium.

5. The zirconium alloy composition according to claim 3, wherein a total amount of the iron and copper is 0.7 wt% or less.

6. A method of preparing a zirconium alloy composition according to any one of claims 1 to 5 comprising:
a first step of mixing alloying elements and then melting them, to thus prepare an ingot;
a second step of heat treating the ingot prepared in the first step in a β-region and then cooling it;
a third step of hot rolling the ingot heat treated and cooled in the second step; and
a fourth step of cold rolling and heat treating the ingot hot rolled in the third step, thus preparing a zirconium alloy.

7. The method according to claim 6, which further comprises a final heat treating following a further cold rolling after the heat treating in the fourth step.

8. High burn-up nuclear fuel cladding tubes, nuclear fuel assembly support grids and structural components in pressurized water reactors and boiling water reactors made from a zirconium alloy composition according to any one of claims 1 to 5.

## Patentansprüche

1. Zirkonlegierungszusammensetzung mit ausgezeichneter Korrosionsfestigkeit für nukleare Einsatzzwecke, bestehend aus 1.3~2.0 Gew.-% Niob, 0.05~0.18 Gew.-% Eisen, 0.008~0.012 Gew.-% Silizium, 0.008~0.012 Gew.-% Kohlenstoff und 0.1~0.16 Gew.-% Sauerstoff, wobei der Rest Zirkon ist.

2. Zirkonlegierungszusammensetzung nach Anspruch 1, wobei die Zusammensetzung aus 1.4~1.6 Gew.-% Niob, 0.08~0.12 Gew.-% Eisen, 0.009~0.011 Gew.-% Silizium, 0.009~0.011 Gew.-% Kohlenstoff und 0.12~0.14 Gew.-% Sauerstoff besteht und der Rest Zirkon ist.

3. Zirkonlegierungszusammensetzung mit ausgezeichneter Korrosionsfestigkeit für nukleare Einsatzzwecke, bestehend aus 2.8~3.5 Gew.-% Niob, 0.2~0.7 Gew.-% mindestens eines der Elemente Eisen und Kupfer, 0.008~0.012 Gew.-% Silizium, 0.008~0.012 Gew.-% Kohlenstoff und 0.1~0.16 Gew.-% Sauerstoff, wobei der Rest Zirkon ist.

4. Zirkonlegierungszusammensetzung nach Anspruch 3, wobei die Zusammensetzung aus 2.8~3.2 Gew.-% Niob, 0.4~0.6 Gew.-% mindestens eines der Elemente Eisen und Kupfer, 0.009~0.011 Gew.-% Silizium, 0.009~0.011 Gew.-% Kohlenstoff und 0.12~0.14 Gew.-% Sauerstoff besteht und der Rest Zirkon ist.

5. Zirkonlegierungszusammensetzung nach Anspruch 3, wobei eine Gesamtmenge der Elemente Eisen und Kupfer 0.7 Gew.-% oder weniger ausmacht.

6. Verfahren zur Herstellung einer Zirkonlegierungszusammensetzung nach irgendeinem der Ansprüche 1 bis 5, bestehend aus:
einem ersten Schritt der Vermischung von Legierungselementen und deren anschließendem Schmelzen, um so einen Block herzustellen;
einem zweiten Schritt der Wärmebehandlung des im Rahmen des ersten Schritts hergestellten Blocks in einem β-Bereich mit anschließender Abkühlung des Blocks;
einem dritten Schritt des Warmwalzens des im Rahmen des zweiten Schritts wärmebehandelten und abgekühlten Blocks; und
einem vierten Schritt des Kaltwalzens und der Wärmebehandlung des im Rahmen des dritten Schritts warmgewalzten Blocks, um auf diese Weise eine Zirkonlegierung herzustellen.

7. Verfahren nach Anspruch 6 mit des Weiteren einer abschließenden Wärmebehandlung nach einem weiteren Kaltwalzen im Anschluss an die Wärmebehandlung im Rahmen des vierten Schritts.

8. Mantelrohre für nukleare Brennstäbe mit hohem Abbrand, Traggitter für den Einsatz von Kernbrennstoffstäben und Konstruktionsteile für Druckwasserreaktoren und Siedewasserreaktoren aus einer Zirkonlegierungszusammensetzung nach irgendeinem der Ansprüche 1 bis 5.

## Revendications

1. Composition d'alliage de zirconium présentant une excellente résistance à la corrosion pour des applications nucléaires, comprenant de 1,3 à 2,0 % en poids de niobium, de 0,05 à 0,18 % en poids de fer, de 0,008 à 0,012 % en poids de silicium, de 0,008 à 0,012 % en poids de carbone et de 0,1 à 0,16 % en poids d'oxygène, le reste étant constitué de zirconium.

2. Composition d'alliage de zirconium selon la revendication 1, dans laquelle ladite composition comprend de 1,4 à 1,6% en poids de niobium, de 0,08 à 0,12 % en poids de fer, de 0,009 à 0,011 % en poids de silicium, de 0,009 à 0,011 % en poids de carbone et de 0,12 à 0,14 % en poids d'oxygène, le reste étant constitué de zirconium.

3. Composition d'alliage de zirconium présentant une excellente résistance à la corrosion pour des applications nucléaires, comprenant de 2,8 à 3,5 % en poids de niobium, de 0,2 à 0,7 % en poids d'au moins l'un parmi le fer et le cuivre, de 0,008 à 0,012 % en poids de silicium, de 0,008 à 0,012 % en poids de carbone et de 0,1 à 0,16 % en poids d'oxygène, le reste étant constitué de zirconium.

4. Composition d'alliage de zirconium selon la revendication 3, dans laquelle ladite composition comprend de 2,8 à 3,2 % en poids de niobium, de 0,4 à 0,6% en poids d'au moins l'un parmi le fer et le cuivre, de 0,009 à 0,011 % en poids de silicium, de 0,009 à 0,011 % en poids de carbone et de 0,12 à 0,14 % en poids d'oxygène, le reste étant constitué de zirconium.

5. Composition d'alliage de zirconium selon la revendication 3, dans laquelle une quantité totale du fer et du cuivre est de 0,7 % en poids ou moins.

6. Procédé de préparation d'une composition d'alliage de zirconium selon l'une quelconque des revendications 1 à 5 comprenant :
une première étape consistant à mélanger des éléments d'alliage puis à les faire fondre, pour ainsi préparer un lingot ;
une deuxième étape consistant à traiter thermiquement le lingot préparé dans la première étape dans une région β puis à le refroidir ;
une troisième étape consistant à laminer à chaud le lingot traité thermiquement et refroidi dans la deuxième étape ; et
une quatrième étape consistant à laminer à froid et à traiter thermiquement le lingot laminé à chaud dans la troisième étape, en préparant ainsi un alliage de zirconium.

7. Procédé selon la revendication 6, qui comprend en outre un traitement thermique final suivant un laminage à froid supplémentaire après le traitement thermique de la quatrième étape.

8. Tubes de gainage de combustible nucléaire à combustion élevée, grilles de support d'ensemble de combustible nucléaire et composants structurels dans des réacteurs à eau sous pression et des réacteurs à eau bouillante constitués d'une composition d'alliage de zirconium selon l'une quelconque des revendications 1 à 5.
